# EUROPEAN PATENT SPECIFICATION

(11) **EP 1 361 288 B1**
(45) Date of publication and mention of the grant of the patent: **27.09.2006**
(21) Application number: 02715740.3
(22) Date of filing: 15.01.2002
(51) Int. Cl.: C22C 9/06, B23K 35/30

(54) **WEAR-RESISTANT COPPER-BASE ALLOY**
VERSCHLEISSFESTE KUPFERBASISLEGIERUNG
ALLIAGE A BASE DE CUIVRE HYDRORESISTANT

(30) Priority: 15.01.2001 JP 2001006798
(43) Date of publication of application: 12.11.2003
(73) Proprietor: Toyota Jidosha Kabushiki Kaisha, Toyota-shi, Aichi 471-8571 (JP)
(72) Inventor: KAWASAKI, Minoru, c/o Toyata Jidosha Kabushiki, Toyota-shi, Aichi 471-8571 (JP); KOBAYASHI, Takao, c/o Kabushiki Kaisha Toyota, Nagakute-cho, Aichi-gun, Aichi 480-1192 (JP); OSHIMA, Tadashi, c/o Kabushiki Kaisha Toyata, Nagakute-cho, Aichi-gun, Aichi 480-1192 (JP)
(74) Representative: TBK-Patent
(86) International application number: PCT/JP2002/000210
(87) International publication number: WO 2002/055748

(56) References cited:
- EP-A1- 0 727 501
- EP-A2- 0 939 139
- JP-A- 4 297 536
- JP-A- 6 010 081
- JP-A- 7 204 886
- JP-A- 61 064 838

## Description

### TECHNICAL FIELD

The present invention relates to a wear-resistant copper-base alloy. The present invention can be applied, for instance, to a copper-base alloy constituting sliding portions of sliding members, typically exemplified by valve train members such as valve seats and valves of an internal combustion engine.

### BACKGROUND ART

Conventionally known as wear-resistant copper-base alloys are beryllium-added copper alloys, copper-nickel-silicon alloys known as Corson alloys, and dispersion-strengthened alloys in which hard oxide particles such as SiO₂, Cr₂O₃ and BeO particles are dispersed in copper-base matrixes. These alloys, however, have a problem of adhesion and do not always possess sufficient wear resistance.

In this connection, the present applicants have developed a wear-resistant copper-base alloy containing zinc and/or tin, which are more easily oxidized than copper. This copper-base alloy has upgraded in adhesion resistance because of generation of oxides of zinc and/or tin, and accordingly has improved in wear resistance. However, since zinc and tin have considerably lower melting points than that of copper, this alloy is not always satisfactory. Particularly when a weld bead layer of the abovementioned copper-base alloy is formed by using such a high-density energy heat source as a laser beam, zinc and/or tin tend to evaporate during the cladding operation and it is not easy to maintain target concentrations of alloying elements. In this connection, recently the present applicants have developed wear-resistant copper-base alloys having composition comprising, by weight, 10.0 to 30.0% nickel, 0.5 to 5.0% silicon, 2.0 to 15.0% iron, 1.0 to 10.0% chromium, 2.0 to 15.0% cobalt, 2.0 to 15.0 % one or more of molybdenum, tungsten, niobium and vanadium. (Japanese Unexamined Patent Publication No.08-225,868 and Japanese Examined Patent Publication No.07-17,978). These alloys are mainly composed of hard particles including silicide of Co-Mo, and a Cu-Ni based matrix. These wear-resistant copper-base alloys secure their wear resistance primarily by the hard particles including silicide of Co-Mo, while these wear-resistant copper-base alloys secure crack resistance primarily by the Cu-Ni based matrix. These alloys attain high wear resistance even when used under severe conditions. Moreover, since neither zinc nor tin is used as a positive element, even if these alloys are clad, there are little inconveniences caused by evaporation of alloying elements and fumes generate in a smaller amount. Consequently, these alloys are especially suitable as alloys for forming weld bead layers by using a high-density energy heat source such as a laser beam.

As mentioned above, the alloys according to Japanese Unexamined Patent Publication No.08-225,868 and Japanese Examined Patent Publication No.07-017,978 exhibit excellent wear resistance even when used under severe conditions. Particularly in an oxidizing atmosphere or in the air these alloys exhibit excellent wear resistance because an oxide exhibiting favorable solid lubrication generates. In the abovementioned alloys according to Japanese Unexamined Patent Publication No.08-225,868 and Japanese Examined Patent Publication No.07-017,978, the hard particles including silicide of Co-Mo and the Cu-Ni based matrix have contradicting characteristics to each other and in order to improve wear resistance, it is necessary to increase the area ratio of hard particles. However, although having an effect of improving wear resistance, silicide of Co-Mo is so hard and brittle that when the composition of these alloys is controlled to increase the area ratio of the hard particles, the wear-resistant copper-base alloys deteriorate in terms of crack resistance. Especially when these wear-resistant copper-base alloys are built up, the weld bead sometimes cracks and the yield rate deteriorates in the building up operation. In contrast, when the composition of these alloys is controlled to decrease the area ratio of the hard particles in the wear-resistant copper-base alloys, these wear-resistant copper-base alloys deteriorate in terms of wear resistance.

In recent years, wear-resistant copper-base alloys have been used under a variety of environments and have been demanded to be capable of exhibiting excellent wear resistance under various environments. Therefore, the industrial world demands an alloy which has good wear resistance, crack resistance and machinability in a balanced manner when compared with those of the alloys according to the above publications.

### DISCLOSURE OF THE INVENTION

The present invention has been developed in view of the abovementioned circumstances. It is an object of the present invention to provide a wear-resistant copper-base alloy, which is advantageous in not only enhancing wear resistance in a high temperature range but also enhancing crack resistance and machinability, which is particularly suitable to be used for forming a weld bead layer, and which has good wear resistance, crack resistance and machinability in a balanced manner.

The present inventors have made earnest studies with the abovementioned object and have focused their attention on the fact that silicide of Co-Mo, which is the principal component of hard particles, is hard and brittle (generally about Hv1200). Then the present inventors have tried to reduce or delete hard and brittle silicide of Co-Mo and to increase the ratio of silicide of Fe-Mo, silicide of Fe-W, or silicide of Fe-V, which have lower hardness and slightly higher toughness than those of silicide of Co-Mo.

On this account, the present inventors have developed a wear- resistant copper-base alloy according to a first invention which can not only enhance wear resistance in a high temperature range but also enhance crack resistance and machinability by allowing Co and Ni contained but reducing the Co content and the Ni content, and by increasing the Fe content and/or the Mo content.

The present inventors have further tried to refine the hard particles by making the wear-resistant copper-base alloy according to the first invention contain niobium carbide (NbC) and have developed a wear-resistant copper-base alloy according to a second invention which can enhance wear resistance in a high temperature range, crack resistance and machinability.

Namely, the wear-resistant copper-base alloy according to the first invention comprises, by weight, of 5.0 to 20.0% nickel, 0.5 to 5.0% silicon, 3.0 to 20.0% iron, 1.0 to 15.0% chromium, 0.01 to 2.00% cobalt, 3.0 to 20.0% one or more of molybdenum, tungsten and vanadium, and the balance of copper with inevitable impurities.

The wear-resistance copper-base alloy according to the second invention comprises, by weight, of 5.0 to 20.0% nickel, 0.5 to 5.0% silicon, 3.0 to 20.0% iron, 1.0 to 15.0% chromium, 0.01 to 2.00% cobalt, 3.0 to 20.0% one or more of molybdenum, tungsten and vanadium, 0.01 to 5.0% niobium carbide and the balance of copper with inevitable impurities. It is to be noted that % means % by weight in this specification, unless otherwise noted.

The wear-resistant copper-base alloy according to the present invention is advantageous in not only enhancing wear resistance in a high temperature range but also enhancing crack resistance and machinability, and accordingly can satisfy requirements for wear resistance, crack resistance and machinability in a balanced manner. Especially when used for cladding, this alloy can satisfy requirements for wear resistance, cladding operability, crack resistance and machinability in a balanced manner.

### BRIEF DESCRIPTION OF THE DRAWINGS

Figure 1 is a perspective view schematically showing that a weld bead layer is formed by radiating a laser beam on a powdery layer which is a mass of powdery layers formed of a wear-resistant copper-base alloy.

Figure 2 is a configurational view schematically showing that a wear resistance test is conducted on a test piece with a weld bead layer.

Figure 3 is a graph showing the relationship between the crack rate of valve seats per cylinder head and the Co content of the wear-resistant copper-base alloy.

Figure 4 is a graph showing the range of the Fe content and the Ni content which correspond to the wear-resistant copper-base alloy of the first invention and the relationship between variation in the Fe content and variation in the Ni content.

Figure 5 is a graph showing the range of the Fe content and the Mo content which correspond to the wear-resistant copper-base alloy of the first invention and the relationship between variation in the Fe content and variation in the Mo content.

Figure 6 is a view based on a microscopic structure (magnification: 10 times) of a weld bead layer formed by radiating a laser beam on a powdery layer which is formed of a powdery material produced of a wear-resistant copper-base alloy whose composition falls in the range of the wear-resistant copper-base alloy of the first invention.

Figure 7 is a view based on the microscopic structure (magnification: 100 times) of the weld bead layer formed by radiating the laser beam on the powdery layer which is formed of the powdery material produced of the wear-resistant copper-base alloy whose composition falls in the range of the wear-resistant copper-base alloy of the first invention.

Figure 8 is a view based on a microscopic structure (magnification: 10 times) of a weld bead layer formed by radiating a laser beam on a powdery layer which is formed of a powdery material produced of a wear-resistant copper-base alloy whose composition falls in the range of the wear-resistant copper-base alloy of the second invention.

Figure 9 is a view based on the microscopic structure (magnification: 100 times) of the weld bead layer formed by radiating the laser beam on the powdery layer which is formed of the powdery material produced of the wear-resistant copper-base alloy whose composition falls in the range of the wear-resistant copper-base alloy of the second invention.

Figure 10 is a graph showing the relationship between the crack rates of valve seats per cylinder head and the content of niobium carbide in the wear-resistant copper-base alloy.

Figure 11 is a graph showing weight loss by abrasion of the present invention 1, the present invention 2 and others.

Figure 12 is a graph showing the crack rates of valve seats per cylinder head of the present invention 1 and the present invention 2.

Figure 13 is a graph showing the number of cylinder heads cut by a single cutting tool in the case of the present invention 1, the present invention 2 and others.

Figure 14 is a diagrammatical view schematically showing a process of forming valve seats by building up a wear-resistant copper-base alloy on ports of an internal combustion engine according to an application example.

Figure 15 is a perspective view of the relevant parts showing the process of forming the valve seats by building up the wear-resistant copper-base alloy on the ports of the internal combustion engine according to the application example.

### BEST MODE FOR CARRYING OUT THE INVENTION

The wear-resistant copper-base alloys according to the first invention and the second invention can generally obtain a structure in which hard particles having a hard phase are dispersed in a matrix. The hard particles have a higher average hardness than that of the matrix. The hard particles can adopt a mode in which silicide is container The matrix can also adopt a mode in which silicide is contained. Here, it is preferable that the hard particles include silicide composed principally of one or more of molybdenum, tungsten and vanadium. As hard particles, it is possible to employ at least one of hard particles including silicide composed principally of Fe-Mo, hard particles including silicide composed principally of Fe-W, and hard particles including silicide composed principally of Fe-V. The matrixes of the wear-resistant copper-base alloys can adopt a mode in which a matrix is mainly composed of a Cu-Ni based solid solution and silicide composed principally of nickel.

According to the wear-resistant copper-base alloys according to the first invention and the second invention, in general, the matrix can have a micro Vickers hardness of about Hv 130 to 250, particularly Hv 150 to 200, and the hard particles can have a hardness of about Hv 250 to 700, particularly Hv 300 to 500, which is higher than that of the matrix. The volume ratio of the hard particles can be appropriately selected and, for instance, the hard particles can be contained by about 10 to 60% by volume, 12 to 55% by volume when each of the wear-resistant copper-base alloys is assumed as 100%. The particle diameter of the hard particles depends on the composition of the wear-resistant copper-base alloys, the solidifying speed of the wear-resistant copper-base alloys and so on. In general, the particle diameter can be 20 to 3000µm, 40 to 600µm, 50 to 500µm, 50 to 200µm, but is not limited to these ranges.

An explanation will be made as to why the composition of the wear-resistant copper-base alloy according to the present invention has been determined.

### *Nickel: 5.0 to 20.0%

Part of nickel dissolves in solid copper to enhance toughness of a copper-base matrix. The other part of nickel forms hard silicide composed principally of nickel and owing to strengthening by silicide dispersion, enhances wear resistance. Nickel also forms a hard phase of hard particles together with cobalt, iron, molybdenum, etc. Below the lower limit of the abovementioned content, the characteristics of copper-nickel based alloys, in particular, good corrosion resistance, heat resistance and wear resistance are hardly exhibited, and moreover the hard particles decrease and the abovementioned effects cannot be obtained sufficiently. Moreover, the amounts of cobalt, iron and/or molybdenum to be added decrease. Above the upper limit of the abovementioned content, the hard particles are excessive, which results in a decrease in toughness, easy cracking when formed into a weld bead layer, and poor building up operability on a target object when the alloy is built up. In consideration of the abovementioned circumstances, the nickel content is set at 5.0 to 20.0%. Preferably, the nickel content can be 5.3 to 18%, especially 5.5 to 17.0%. In accordance with the degree of importance of various characteristics demanded for the wear-resistant copper-base alloy according to the present invention, the lower limit of the abovementioned nickel content can be exemplified as 6.0%, 7.0% and the upper limits corresponding to these lower limits can be exemplified as 19.0%, 18.0%, but the nickel content is not limited to these ranges.

### *Silicon: 0.5 to 5.0%

Silicon is an element forming silicide. Silicon forms silicide composed principally of nickel or silicide composed principally of molybdenum (tungsten, vanadium) and moreover contributes strengthening of the copper-base matrix. Especially, silicide composed principally of molybdenum (or tungsten, vanadium) serves to maintain high temperature lubricity of the wear-resistant copper-base alloy according to the present invention. Below the lower limit of the abovementioned content, the abovementioned effects cannot be obtained sufficiently. Above the upper limit of the abovementioned content, toughness of the wear-resistant copper-base alloy decreases and cracking tends to occur more easily when the alloy is built up as a weld bead layer and building up operability on a target object deteriorates. In consideration of the above circumstances, silicon is set to be contained in the range from 0.5 to 5.0%. Preferably, the silicon content is 1.0 to 4.0%, especially 1.5 to 3.0%. In accordance with the degree of importance of various characteristics demanded for the wear-resistant copper-base alloy according to the present invention, the lower limit of the abovementioned silicon content can be exemplified as 0.6%, 0.7% and the upper limits corresponding to these lower limits can be exemplified as 4.5%, 3.8% but the silicon content is not limited to these ranges.

### *Cobalt: 0.01 to 2.00%

Cobalt hardly dissolves in solid copper and serves to form silicide together with molybdenum and stabilize the silicide. Cobalt in an amount of up to 2.00% forms a solid solution with Ni, Fe, Cr or the like and improves toughness. Cobalt also increases a liquid phase separation tendency in a molten state. It is supposed that mainly a liquid phase separated from a liquid phase portion to become a matrix forms hard particles. Below the lower limit of the abovementioned content, the abovementioned effects cannot be obtained sufficiently. Or when cobalt is contained by 0%, crack sensibility is high.

Above the upper limit of the abovementioned content, coarseness of the hard phase sharply increases, aggressiveness against a mating material enhances and toughness of the wear-resistant copper-base alloy deteriorates and moreover cracking tends to occur more easily when the alloy is clad on a target object. In consideration of the abovementioned circumstances, the cobalt content is set to be contained in the range from 0.01 to 2.00%. Preferably, the cobalt content can be 0.01 to 1.97%, especially 0.50 to 1.70%. In accordance with the degree of importance of various characteristics demanded for the wear-resistant copper-base alloy according to the present invention, the upper limit of the abovementioned cobalt content can be exemplified as 1.80%, 1.60%, 1.50% and the lower limits corresponding to these upper limits can be exemplified as 0.02%, 0.03%, but the cobalt content is not limited to these ranges.

### *Iron: 3.0 to 20.0%

Iron serves similar functions to those of cobalt and can replace expensive cobalt. Iron hardly dissolves in a copper base matrix and exists chiefly in the hard particles as silicide of Fe-Mo, Fe-W or Fe-V. Silicide of Fe-Mo, Fe-W or Fe-V has a lower hardness and a slightly higher toughness than those of silicide of Co-Mo. The iron content is set at 3.0 to 20.0% so as to generate a large amount of the abovementioned silicide of Fe-Mo and so on. Below the lower limit of the abovementioned content, the hard particles decrease, wear resistance deteriorates and the abovementioned effects cannot be obtained sufficiently. Above the abovementioned content, coarseness of the hard phase of the hard particles sharply increases, crack resistance of the wear-resistant copper-base alloy deteriorates and moreover aggressiveness against a mating material increases. In consideration of the abovementioned circumstances, the iron content is set at 3.0 to 20.0% as mentioned before. Preferably the iron content can be 3.1 to 19.0%, particularly 3.5 to 18.0%. In accordance with the degree of importance of various characteristics demanded for the wear-resistant copper-base alloy according to the present invention, the upper limit of the abovementioned iron content can be exemplified as 18.0%, 16.0%, and the lower limits of the iron content corresponding to these upper limits can be exemplified as 3.3%, 3.6%, but the iron content is not limited to these ranges.

### *Chromium: 1.0 to 15.0%

Chromium serves similar functions to those of iron and cobalt, hardly dissolves in a solid copper-base matrix, and forms an alloy together with part of nickel and part of cobalt so as to enhance oxidation resistance. Moreover, chromium exists in a hard phase and increases a liquid phase separation tendency in a molten state. Below the lower limit of the abovementioned content, the abovementioned effects cannot be obtained sufficiently. Above the upper limit of the abovementioned content, coarseness of the hard phase sharply increases and aggressiveness against a mating material increases. In consideration of the abovementioned circumstances, the chromium content is set at 1.0 to 15.0%. Preferably the chromium content can be 1.1 to 10.0%, particularly 1.2 to 8.0%. In accordance with the degree of importance of various characteristics demanded for the wear-resistant copper-base alloy according to the present invention, the lower limit of the abovementioned chromium content can be exemplified as 1.1%, 1.2% and the upper limits corresponding to these lower limits can be exemplified as 7.0%, 6.0%, 4.0%, but the chromium content is not limited to these ranges.

### *One or more of molybdenum, tungsten and vanadium: 3.0 to 20.0%

Molybdenum combines with silicon to generate silicide (generally silicide of Fe-Mo having toughness) within the hard particles and enhances wear resistance and lubricity at high temperatures. This silicide has a lower hardness and a higher toughness than those of silicide of Co-Mo. This silicide generates within the hard particles and enhances wear resistance and lubricity at high temperatures. Silicide composed principally of Mo easily generates an oxide which is principally composed of molybdenum and is excellent in solid lubricity even in a relatively low temperature range of about 500 to 700°C and even under a low oxygen partial pressure in addition to the low temperature range. In use, this oxide covers a surface of the copper-base matrix and advantageously avoids direct contact between a mating member and the matrix. This secures self lubricity. Tungsten and vanadium serve basically similar functions to those of molybdenum. Tungsten generates silicide of Fe-W within the hard particles, while vanadium generates silicide of Fe-V within the hard particles.

When the content of one or more of molybdenum, tungsten and vanadium is below the lower limit of the abovementioned content, the ratio of the hard particles decreases, wear resistance deteriorates, and improving effects cannot be exhibited sufficiently. Above the upper limit, the hard particles are excessive, toughness is damaged, crack resistance deteriorates and cracking tends to occur easily. In consideration of the abovementioned circumstances, the content is set at 3.0 to 20.0%. Preferably, the content of one or more of molybdenum, tungsten and vanadium can be 3.0 to 19.0%, especially 3.0 to 18.0%. In accordance with the degree of importance of various characteristics demanded for the wear-resistant copper-base alloy according to the present invention, the lower limit of the abovementioned content of one or more of molybdenum, tungsten and vanadium can be exemplified as 3.2%, 4.0% and the upper limits corresponding to these lower limits can be exemplified as 18.0%, 17.0%, 16.0% but the content is not limited to these ranges. Note that it is also possible to determine that one or more of molybdenum and tungsten can be contained.

The wear-resistant copper-base alloy of the present invention can adopt, for instance, a mode in which the total content of (iron + molybdenum) is set in the range from 10 to 35% by weight. This is advantageous in securing silicide of Fe-Mo having a higher toughness than that of silicide of Co-Mo. The wear-resistant copper-base alloy according to the present invention can adopt, for instance, a mode in which the total content of (nickel + iron) is set in the range from 10 to 35% by weight. This is because below this range, wear resistance is insufficient and above this range the crack rate sharply increases.

### *Niobium carbide (NbC) 0.01 to 5.0%

Niobium carbide serves to generate nucleuses of hard particles and contributes to refinement of the hard particles and compatible attainment of crack resistance and wear resistance. When the niobium carbide content is below the lower limit of the abovementioned content, the improving effect of refining the hard particle by addition of niobium carbide is not always sufficient. Above the upper limit of the abovementioned content, a tendency to damage crack resistance is admitted. In consideration of the above circumstances, the content is set at 0.01 to 5.0%. Preferably the content can be 0.01 to 4.5%, 0.05 to 4.0%. In accordance with the degree of importance of various characteristics demanded for the wear-resistant copper-base alloy according to the present invention, the upper limit of the abovementioned niobium carbide content can be exemplified as 4.8%, 3.0%, 2.0% and the lower limits corresponding to these lower limits can be exemplified as 0.02%, 0.04%, 0.1%, but the content is not limited to these ranges. Note that niobium carbide is to be added if necessary, and that there is no need to contain niobium carbide.

The wear-resistant copper-base alloy according to the present invention can adopt at least one of the following modes for carrying out the present invention.

*The wear-resistant copper-base alloy according to the present invention can be used as a weld bead alloy to be built up on a target object. An example of a method for building up is to melt and build up the alloy by using such a high-density energy heat source as a laser beam, an electron beam and an arc. In the case of building up, the wear-resistant cooper-base alloy according to the present invention can be made into powder as a material for buildup, and while packed in a portion to be built up, the powder can be melted and built up by using the abovementioned high-density energy heat source such as a laser beam, an electron beam, and an arc. The abovementioned wear-resistant copper-base alloy can be prepared as a material for buildup in the form of not only powder but also wire or rods. The laser beam can be exemplified as a carbon dioxide gas laser beam, a YAG laser beam, etc. which have a high energy density. The material of the target object to be built up can be exemplified as aluminum, aluminum-based alloys, iron or iron-based alloys, copper or copper-based alloys. An example of the basic composition of the aluminum alloy to constitute a target object is an aluminum alloy for casting, for instance, one of an Al-Si based alloy, an Al-Cu based alloy, an Al-Mg based alloy, and an Al-Zn based alloy. Examples of the target object include an engine such as an internal combustion engine. In the case of the internal combustion engine, materials for moving valves, valve train members, for instance, can be listed. In this case, the alloy can be applied to valve seats to constitute exhaust ports or to valve seats to constitute inlet ports. In this case, the wear-resistant copper-base alloy according to the present invention can constitute the entire part of valve seats, or the wear-resistant copper-base alloy according to the present invention can be built up on valve seats. However, it is to be noted that the wear-resistant copper-base alloy according to the present invention is not limited to materials for movable valves of an engine such as an internal combustion engine, and can be applied to sliding materials, sliding members and sintered bodies of other systems which demand wear resistance. The wear-resistant copper-base alloy according to the present invention can suppress fume generation even when built up, because the alloy does not include zinc or tin as a positive element.

*When used for building up, the wear-resistant copper-base alloy according to the present invention can constitute a weld bead layer after a build up operation or can be an alloy for build up before a building up operation.

*The wear-resistant copper-base alloy according to the present invention can be applied, for example, to copper-base sliding members or sliding portions and, more concretely, can also be applied to materials for copper-base movable valves to be attached to an internal combustion engine. The wear-resistant copper-base alloy according to the present invention can be used for the purposes of building up, casting and sintering.

The following technical concepts can also be grasped from the above description.
(Appendix 1) A weld bead layer formed of the wear-resistant copper-base alloy according to each claim.
(Appendix 2) A built-up sliding member formed of the wear-resistant copper-base alloy according to each claim
(Appendix 3) A weld bead layer or a built-up sliding member according to Appendix 1 or Appendix 2, formed by using a high-density energy heat source selected from a laser beam, an electron beam and an arc.
(Appendix 4) A movable valve member (for example, a valve seat) for an internal combustion engine having a weld bead layer formed of the wear-resistant copper-base alloy according to each claim
(Appendix 5) A method of producing a sliding member, characteristically using the wear-resistant copper-base alloy according to each claim and covering a substrate with the wear-resistant copper-base alloy.
(Appendix 6) A method of producing a sliding member, characteristically forming a weld bead layer with excellent wear resistance by using a powdery material of the wear-resistant copper-base alloy according to each claim, forming a powdery layer by covering a substrate with the powdery material, melting the powdery layer and then solidifying the molten layer.
(Appendix 7) A method of producing a sliding member according to Appendix 6, characterized in that the weld bead layer is formed by rapid heating and rapid cooling.
(Appendix 8) A method of producing a sliding member according to Appendix 6, characterized in that the powdery layer is melted by a high-density energy heat source selected from a laser beam, an electron beam and an arc.
(Appendix 9) A method of producing a sliding member according to Appendix 5 or Appendix 6, characterized in that the substrate is formed of aluminum or an aluminum alloy.
(Appendix 10) A method of producing a sliding member according to Appendix 5 or Appendix 6, characterized in that the substrate is a movable valve component part or a movable valve portion (for example, a valve seat) for an internal combustion engine.
(Appendix 11) A valve seat alloy formed of the wear-resistant copper-base alloy according to each claim.
(Appendix 12) A wear-resistant copper-base alloy according to each claim, characterized in that hard particles are dispersed in a matrix, the hard particles are mainly composed of silicide composed principally of one or more of Fe-Mo, Fe-W and Fe-V, and a Ni-Fe-Cr based solid solution, and the matrix is mainly composed of a Cu-Ni based solid solution and silicide composed principally of nickel.
(Appendix 13) A powdery material formed of the wear-resistant copper-base alloy according to each claim.
(Appendix 14) A powdery material for buildup, formed of the wear-resistant copper-base alloy according to each claim.
(Appendix 15) A sliding member, characterized in that a weld bead layer formed of the wear-resistant copper-base alloy recited in each claim is overlaid on a substrate. (Appendix 16) A sliding member, characterized in that a weld bead layer formed of the wear-resistant copper-base alloy recited in each claim is overlaid on a substrate formed of aluminum or an aluminum alloy as a base material.
(Appendix 17) A wear-resistant copper-base alloy according to each claim, characterized in that the content of (Fe + Mo) is set in the range from 10 to 35% by weight.
(Appendix 18) A wear-resistant copper-base alloy according to each claim, characterized in that the content of (Fe + Mo) is set in the range from 10 to 35% by weight and the content of (Ni + Fe) is set in the range from 10 to 35% by weight.

### (EXAMPLES)

Hereinafter, examples of the present invention will be concretely described together with comparative examples.

The composition (mixing composition) of Sample a to Sample i of the wear-resistant copper-base alloys used in these examples is shown in Table 1. The mixing composition basically comes in consistency with target composition after analysis. Sample a, Sample c, Sample e and Sample g fall out of the compositional range of claim 1 and indicate comparative examples.

Sample a to Sample i were powders produced by mixing metals so as to have the composition shown in Table 1, melting the metals under a high vacuum and applying gas atomization to molten metal. The powder had a particle diameter of about 5 µm to 300 µm. The gas atomization was carried out by spraying molten metal at high temperature from a nozzle under a non-oxidizing atmosphere (an argon gas atmosphere or a nitrogen gas atmosphere). Owing to the production by gas atomization, the abovementioned powders had high component uniformity.

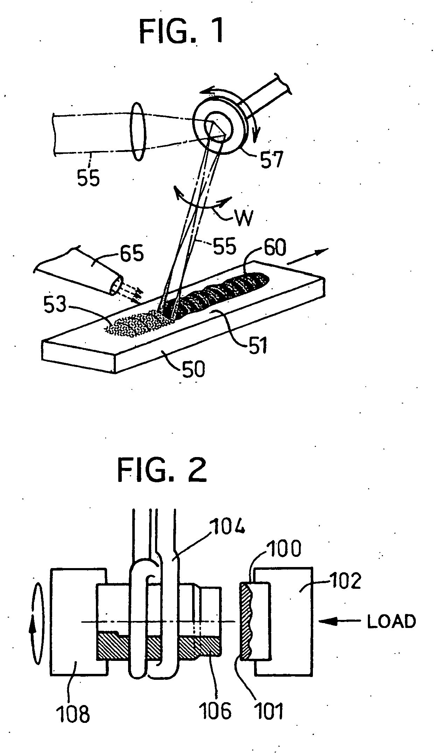

As shown in Figure 1, a substrate 50 formed of an aluminum alloy (material: AC2C) was used as a target object to be clad. With a powdery layer 53 formed by overlaying the abovementioned Sample b as an example on a portion 51 to be built up of the substrate 50, a laser beam 55 of a carbon dioxide gas laser was oscillated by a beam oscillator 57 and at the same time, the laser beam 55 and the substrate 50 were put in relative movement, whereby the laser beam 55 was radiated on the powdery layer 53. Thus, the powdery layer 53 was melted and then solidified so as to form a weld bead layer 60 (weld bead thickness: 2.0mm, weld bead width: 6.0mm) on the portion 51 to be built up of the substrate 50. This building up operation was carried out while a shielding gas (an argon gas) was blown from a gas supply pipe 65 to the portion to be built up. In the abovementioned radiation treatment, the laser beam 55 was oscillated in the width direction (the direction of Arrow W) of the powdery layer 53 by the beam oscillator 57. In the above radiation treatment, output powder of the carbon dioxide gas laser was 4.5 kW, the diameter of the laser beam 55 at the powdery layer 53 was 2.0mm, the relative moving speed of the laser beam 55 and the substrate 50 was 15.0mm/sec, and the rate of the shielding gas flowing was 10 liter/min. Similarly, weld bead layers of other samples were respectively formed.

An examination of the weld bead layers formed of each of the respective samples showed that hard particles having a hard phase were dispersed in a matrix. The volume ratio of the hard particles in each of the wear-resistant copper-base alloys fell in the range from about 5 to 60 % when the wear-resistant copper-base alloy was assumed as 100%.

The crack rates during building up operations were investigated on the weld bead layers formed by using Sample a to Sample i. Moreover, an abrasion test was carried out to measure weight loss by abrasion of the weld bead layers formed by using Samples a to Sample i. As shown in Figure 2, the abrasion test was carried out as follows: A test piece 100 having a weld bead layer 101 was held by a first holder 102. On the other hand, with an inductive coil 104 wound around its outer circumstance, a cylindrical mating member 106 was held by a second holder 108 and heated by high frequency induction heating by the inductive coil 104, and at the same time the mating member 106 was rotated and an axial end surface of the mating member 106 was pressed against the weld bead layer 101 of the test piece 100. As for test conditions, the load was 2.0 MPa, the sliding speed was 0.3m/sec., the test time was 1.2 ksec., and the surface temperature of the test piece 100 was 323 to 523 K. The mating member 106 was a JIS-SUH35 equivalent whose surface was covered with a wear-resistant stellite alloy. Furthermore, a cutting test was carried out to examine machinability of the weld bead layers formed by using Sample a to Sample i. The cutting test was evaluated by the number of cylinder heads with the weld bead layers cut by a single cutting tool. Table 1 shows not only the composition of Sample a to Sample i, but also crack rates (%), during the building up operation, of the weld bead layers formed by using the composition of Sample a to Sample i, weight loss (mg) by abrasion of the weld bead layers in the abrasion test, and the test results on machinability of the weld bead layers (head number) in the cutting test.

As for the crack rates, as shown in Table 1, the crack rates were high on the weld bead layers formed of Sample a and Sample c as comparative examples. In contrast to these, the crack rates were low on the weld bead layers formed of Sample b, Sample d, Sample f, Sample h, Sample i as examples of the present invention. As for weight loss by abrasion, the weight loss by abrasion was as large as over 10mg on the weld bead layers formed of Sample c, Sample e and Sample g as comparative examples, that is to say, wear resistance was not sufficient. In contrast to these, the weight loss by abrasion was as small as no more than 10mg on the weld bead layers formed of Sample b, Sample d, Sample f, Sample h and Sample i as examples of the present invention. The weight loss by abrasion was especially small on the weld bead layers formed of Sample b and Sample d. As for machinability, the number of cylinder heads cut was small, that is to say, machinability was not sufficient on the weld bead layers formed of Sample a as a comparative example. Accordingly, it was understood from the test results shown in Table 1 that the weld bead layers formed of the powders of the wear-resistant copper-base alloys of Sample b, Sample d, Sample f, Sample h, Sample i as examples of the present invention obtained crack resistance, wear resistance and machinability in a balanced manner.

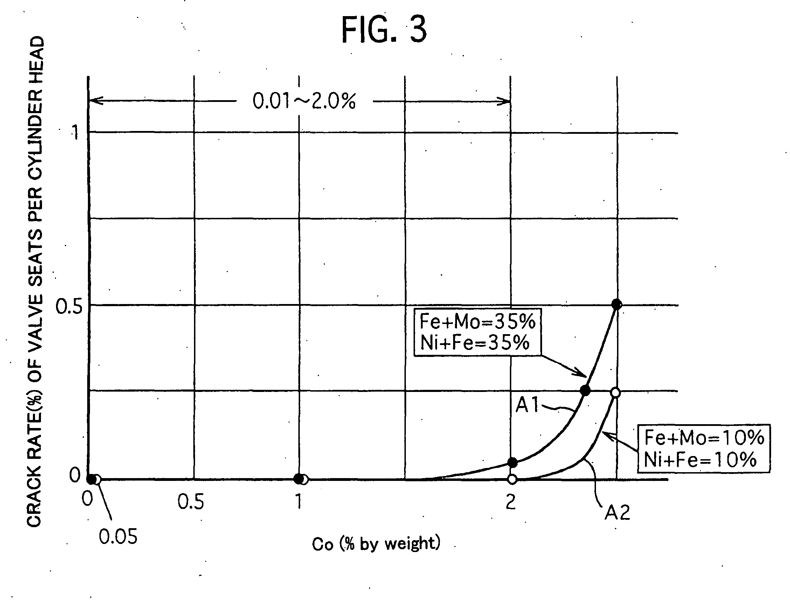

Figure 3 shows the relationship between the crack rates (%) of the weld bead layers to constitute valve seats and the Co content. The crack rates of the weld bead layers shown in Figure 3 means the rates (%) of cracking in the valve seats per cylinder head. Characteristic Curve A1 indicates the case of Fe + Mo = 35%, Ni + Fe = 35%, which agreed with the basic composition of Sample b. Characteristic Curve A2 indicates the case of Fe + Mo = 10%, Ni + Fe = 10%, which agreed with the basic composition of Sample f. As indicated by Characteristic Curves A1, A2 in Figure 3, the crack rates were quite low when the Co content was 2% or less. Especially when the Co content was 1.6% or less, the crack rates were almost zero. When the Co content exceeded 2%, however, the crack rates sharply increased. This is supposed to be because silicide of Co-Mo, which was hard and brittle, became excessive. Therefore, suppression of the Co content to 2.00% or less is effective in reducing cracking of weld bead layers during a building up operation.

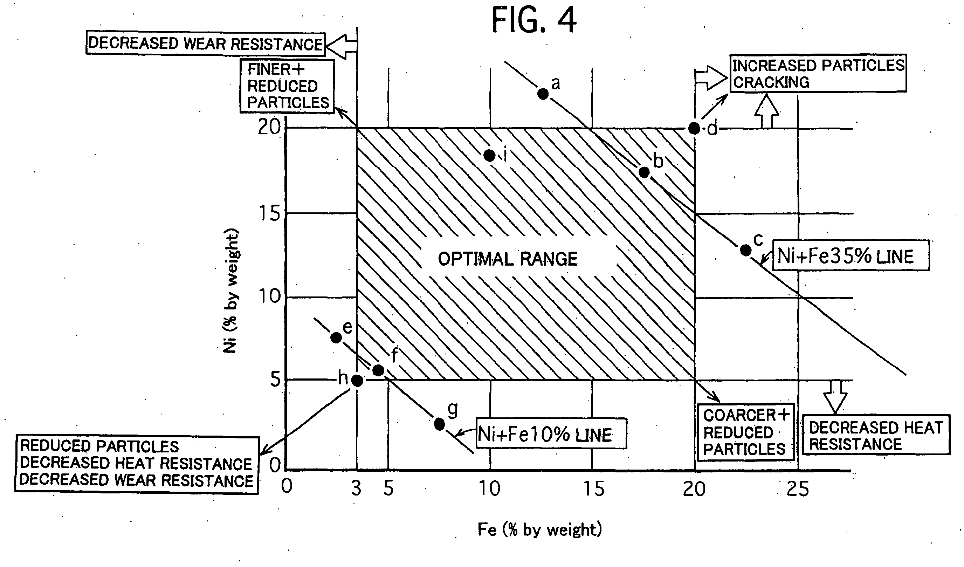

Figure 4 shows influences which the Fe content and the Ni content in the wear-resistant copper-base alloys gave on the wear-resistant copper-base alloys, on the basis of results of the tests conducted by the present inventors. a, b, c,... in Figure 4 correspond to the samples in Table 1. The quadrangular hatched area shown in Figure 4 falls in the range of the present invention. With the Fe content of less than 3%, the ratio of the hard particles decreases and wear resistance deteriorates. When both the Fe content and the Ni content decrease below the Fe content of about 3% and the Ni content of about 5%, there are tendencies that the hard particles decrease, that heat resistance deteriorates, and that wear resistance deteriorates. Ni of less than 5% deteriorates heat resistance. When the Ni content is less than 5% and the Fe content increases beyond 20%, there are tendencies that the hard particles become coarser and that the number of hard particles decreases. When the Fe content is less than 3% and the Ni content exceeds 20%, there are tendencies that the hard particles become excessively fine and that the number of hard particles decreases. When both the Fe content and the Ni content increase above the Fe content of about 20% and the Ni content of about 20%, there are tendencies that the hard particles increase and that cracking occurs.

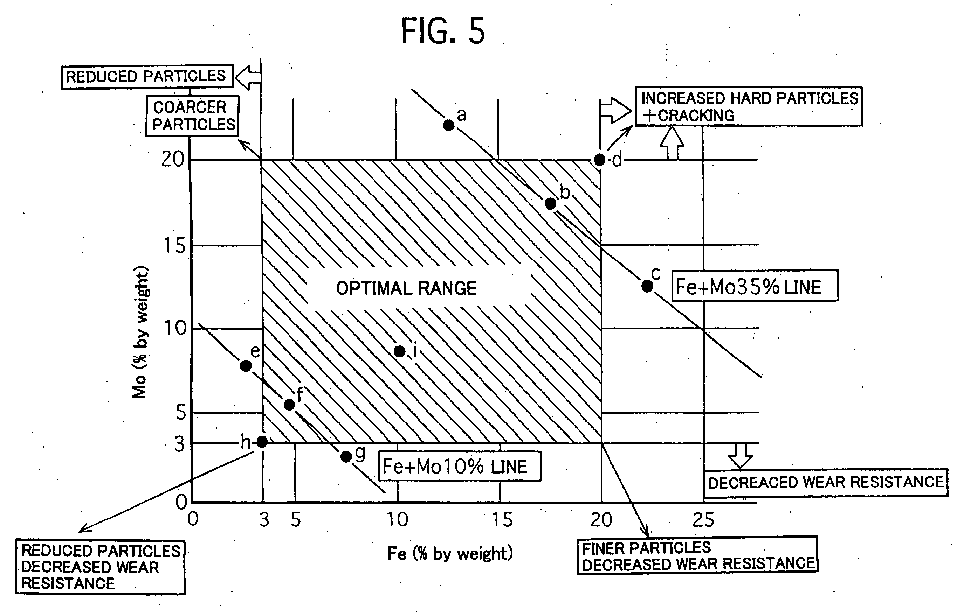

Figure 5 shows influences which the Fe content and the Mo content in the wear-resistant copper-base alloys gave on the wear-resistant copper-base alloys, on the basis of results of the tests conducted by the present inventors, a, b, c, ...shown in Figure 5 correspond to the samples in Table 1. The quadrangular hatched area shown in Figure 5 falls in the range of the present invention. When both the Fe content and the Ni content decrease below the Fe content of about 3% and the Mo content of about 3%, there are tendencies that the hard particles decrease and that wear resistance deteriorates. When the Mo content is less than 3% and the Fe content increases beyond 20%, there are tendencies that the hard particles are excessively fine and that wear resistance deteriorates. With the Fe content of less than 3%, there is a tendency that the hard particles decrease. When the Fe content is less than 3% and the Mo content increases beyond 20%, there is a tendency that the hard particles are coarse. When both the Fe content and the Mo content increase beyond the Fe content of about 20% and the Mo content of about 20%, there are tendencies that the hard particles increase and that cracking occurs.

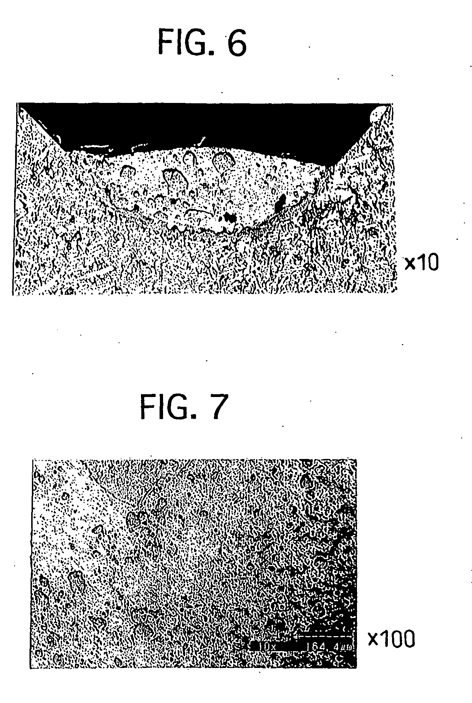

A microscopic structure of a weld bead layer formed by radiating a laser beam on a powdery layer formed of a powdery material produced from a copper-base alloy with the abovementioned composition of Sample i is shown in Figure 6 and Figure 7. Figure 6 has a magnification of 10 times and Figure 7 has a magnification of 100 times. As shown in Figure 6 and Figure a great number of hard particles having a hard phase were dispersed in the entire matrix. The hard particles had a particle diameter of about 10 to 100 µm.

The present inventors examined the above structure by using an EPMA analyzer and found that the hard particles were mainly composed of silicide composed principally of Fe-Mo and a Ni-Fe-Cr based solid solution. The matrix constituting the weld bead layer was mainly composed of a Cu-Ni based solid solution and network silicide composed principally of nickel. The matrix of the copper-base alloy had a hardness (a micro Vickers hardness) of about Hv 150 to 200, while the hard particle had a hardness of about Hv 300 to 500, which was higher than that of the matrix.

It is assumed that each of the wear-resistant copper-base alloys according to the examples of the present invention has a high liquid-phase separation tendency in its molten state, easily generates plural kinds of liquid phases which are hardly mixed with each other, and has a tendency that the separated liquid phases vertically separate from each other owing to a difference in gravity and heat transmission conditions. In this case, it is assumed that when the liquid phase in a granular state rapidly solidifies, the liquid phase in a granular state generates hard particles in a granular state.

As shown in Table 3, Sample m, Sample n, Sample o, Sample p, Sample q of powders of the wear-resistant copper-base alloys having the composition in which molybdenum was replaced with tungsten were formed by gas atomization. Then in a similar way to the above and as shown in Figure 1, a powdery layer 53 formed of Sample m was melted by radiating a laser beam thereon and solidified, whereby a weld bead layer 60 was formed on a portion 51 to be built up of a substrate 50. Similarly, a weld bead layer 60 was formed by radiating a laser beam at powder formed of each of Sample w to Sample z.

An examination on each of the weld bead layers revealed that hard particles having a hard phase were dispersed in a matrix. The volume ratio of the hard particles fell in the range from about 5 to 60% when the wear-resistant copper-base alloy was assumed as 100%. Examinations were also carried out on cracking conditions of the weld bead layer, weight loss by abrasion of the weld bead layer and machinability of the weld bead layer, formed by using each of Sample m to Sample q. The test results are shown in Table 3. Machinability was evaluated in terms of the number of cylinder heads cut by a single cutting tool. As for the crack rates, as shown in Table 3, it was understood that the weld bead layers formed of the powders of the wear-resistant copper-base alloys of Sample m, Sample n, Sample o, Sample p and Sample q as examples of the present invention obtained crack resistance, wear resistance and machinability in a balanced manner.

Furthermore, as shown in Table 4, powders of wear-resistant copper-base alloys having the composition (the mixing composition) of Sample v, Sample w, Sample x, Sample y and Sample z of wear-resistant copper-base alloys including niobium carbide were formed as other examples of the present invention by gas atomization. Then in a similar way to the above and as shown in Figure 1, a powdery layer 53 formed of Sample v was radiated by a laser beam whereby the powdery layer 53 was melted and solidified into a weld bead layer 60. Similarly, a weld bead layer 60 was formed by radiating a laser beam on a powdery layer 53 formed of each of Sample w to Sample z. An examination on each weld bead layer showed that hard particles having a hard phase were dispersed in a matrix. The volume ratio of the hard particles fell in the range from about 5 to 60% when the wear-resistant copper-base alloy was assumed as 100%. Examinations were also conducted on cracking conditions of the weld bead layer, weight loss by abrasion of the weld bead layer, and machinability of the weld bead layer, formed by using each of Sample v to Sample z. Table 4 also shows crack rates (%) of the weld bead layers, weight loss (mg) by abrasion of the weld bead layers and test results on machinability (head number) of the weld bead layers. Machinability was evaluated in terms of the number of cylinder heads cut by a single cutting tool.

As for the crack rates, as shown in Table 4, it was understood that the weld bead layers formed of the powders of the wear-resistant copper-base alloys of Sample v, Sample w, Sample x, Sample y and Sample z as examples of the present invention obtained crack resistance, wear resistance and machinability in a balanced manner.

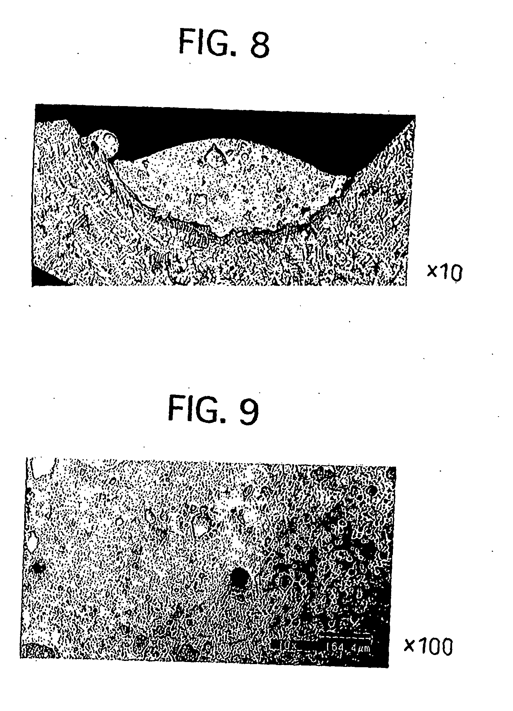

A microscopic structure of the weld bead layer formed of the powdery material produced of the abovementioned copper-base alloy with the composition of Sample z containing niobium carbide (NbC) is shown in Figure 8 and Figure 9. Figure 8 has a magnification of 10 times and Figure 9 has a magnification of 100 times. As shown in Figure 8 and Figure 9, a great number of hard particles having a hard phase were dispersed in the entire matrix. The hard particles had a particle diameter of about 10 to 100 µm. The present inventors examined the above structure by using an EPMA analyzer and found that in a similar way to the above, the hard particles were mainly composed of silicide composed principally of Fe-Mo and a Ni-Fe-Cr based solid solution.

The present inventors confirmed by using an X-ray diffraction analyzer that the silicide constituting the hard particles and composed principally of Fe-Mo had a Laves phase. The matrix constituting the weld bead layer was mainly composed of a Cu-Ni based solid solution and network silicide composed principally of nickel. The matrix of the copper-base alloy had a hardness (a micro Vickers hardness) of about Hv 150 to 200. The hard particles had a hardness of Hv 300 to 500, which was higher than that of the matrix of the copper-base alloy.

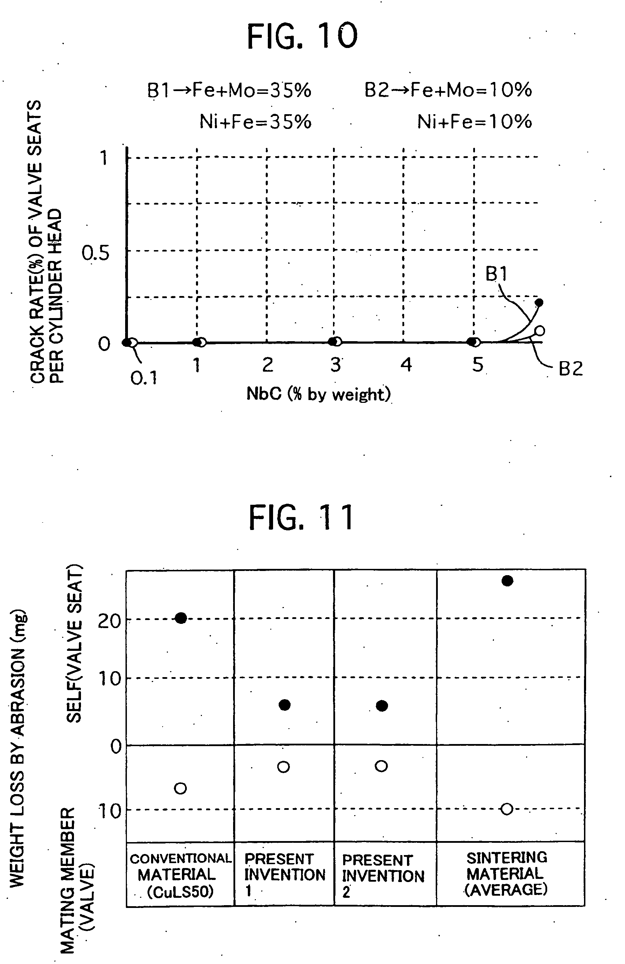

Figure 10 shows the relationship between the crack rates of weld bead layers and the niobium carbide (NbC) content in the case where the weld bead layers to constitute valve seats were formed in a cylinder block by radiating a laser beam on powdery layers of powder formed of each of the abovementioned wear-resistant copper-base alloys containing niobium carbide. The crack rates of the weld bead layers were measured as the rates (%) of valve seats cracked per cylinder head. Characteristic Curve B1 shown in Figure 10 indicates a case of Fe + Mo = 35%, Ni + Fe = 35%, which corresponded to the basic composition of Sample v. Characteristic Curve B2 indicates a case of Fe + Mo = 10%, Ni + Fe = 10%, which corresponded to the basic composition of Sample x. As shown by Characteristic Curves B1, B2 in Figure 10, when the niobium carbide content was 5% or less, the crack rates were extremely low, but when the niobium carbide content exceeded 5%, the crack rates of the weld bead layers sharply increased. Therefore, suppression of the niobium carbide content to 5% or less is effective in reducing cracking of weld bead layers during a building up operation.

Figure 11 shows results of tests on weight loss by abrasion of a self (a valve seat) as a weld bead layer and weight loss by abrasion of a mating member (a valve). The present invention 1 shown in Figure 11 was based on a weld bead layer formed by building up and radiating a laser beam on wear-resistant copper-base alloy powder with the composition of Sample i. The present invention 2 was based on a weld bead layer formed by building up and radiating a laser beam on wear-resistant copper-base alloy powder formed of Sample z with the composition including 1.2% NbC. As mentioned before, % means % by weight in the present invention, unless otherwise noted. A conventional material (Model: CuLS50) was a weld bead layer formed by laser beam radiation on an alloy composed of 15% Ni, 2.9% Si, 7% Co, 6.3% Mo, 4.5% Fe, 1.5% Cr and the balance of substantial Cu (the Co content being slightly large), and was similarly subjected to an abrasion resistance test. As another comparative example, a test piece was formed of an iron-based sintering material (Composition: the balance of Fe, 0.25 to 0.55% C, 5.0 to 6.5% Ni, 5.0 to 8.0% Mo, 5.0 to 6.5% Cr) and similarly subjected to an abrasion test. As shown in Figure 11, in the cases of the present invention 1 and the present invention 2, weight loss by abrasion of the self, i.e., the wear-resistant copper base alloy (the valve seat) was small, and weight loss by abrasion of the mating member (the valve) was also small. In contrast to these, in the cases of the conventional material, and the iron-based sintering material as a comparative example, weight loss by abrasion of the self (the valve seat) was large and weight loss by abrasion of the mating member (the valve) was also large.

Weld bead layers to act as valve seats were individually formed by employing powders whose compositions were prescribed by adjusting the abovementioned conventional material (Mode: CuLS50) to have highly wear resistant composition and lowly wear resistant composition, and radiating a laser beam on powdery layers formed of these powders. Then these weld bead layers were examined about their crack rates. Here, the highly wear resistant composition means composition aiming an increase in the ratio of the hard phase generating in the building up operation. The lowly wear resistant composition means composition aiming a decrease in the ratio of the hard phase generating in the building up operation.

Similarly, weld bead layers were individually formed by employing powders whose compositions were prescribed by adjusting the present invention 1 to have highly wear resistant composition and lowly wear resistant composition, and radiating a laser beam on powdery layers formed of the respective powders. These weld bead layers were examined on their crack rates. Similarly, weld bead layers were individually formed by employing powders whose compositions were prescribed by adjusting the present invention 2 to have highly wear resistant composition and lowly wear resistant composition, and radiating a laser beam on powdery layers formed of the respective powders. These weld bead layers were examined on their crack rates. The highly wear resistant composition of the conventional material was composed of the balance of Cu, 20.0% Ni, 2.90% Si, 9.30% Mo, 5.00% Fe, 1.50% Cr, and 6.30% Co. The lowly wear resistant composition of the conventional material was composed of the balance of Cu, 16.0% Ni, 2.95% Si, 6.00% Mo, 5.00% Fe, 1.50% Cr, and 7.50% Co. The highly wear resistant composition of the present invention 1 was based on Sample b and composed of the balance of Cu, 17.5% Ni, 2.3% Si, 17.5% Mo, 17.5% Fe, 1.5% Cr and 1.0% Co. The lowly wear resistant composition of the present invention 1 was based on Sample f and composed of the balance of Cu, 5.5% Ni, 2.3% Si, 5.5% Mo, 4.5% Fe, 1.5% Cr and 1.0% Co.

The highly wear resistant composition of the present invention 2 was based on Sample v and composed of the balance of Cu, 17.5% Ni, 2.3% Si, 17.5% Mo, 17.5% Fe, 1.5% Cr, 1.0% Co and 1.2% NbC. The lowly wear resistant composition of the present invention 2 was based on Sample x and composed of the balance of Cu, 5.5% Ni, 2.3% Si, 5.5% Mo, 4.5% Fe, 1.5% Cr, 1.0% Co and 1.2% NbC.

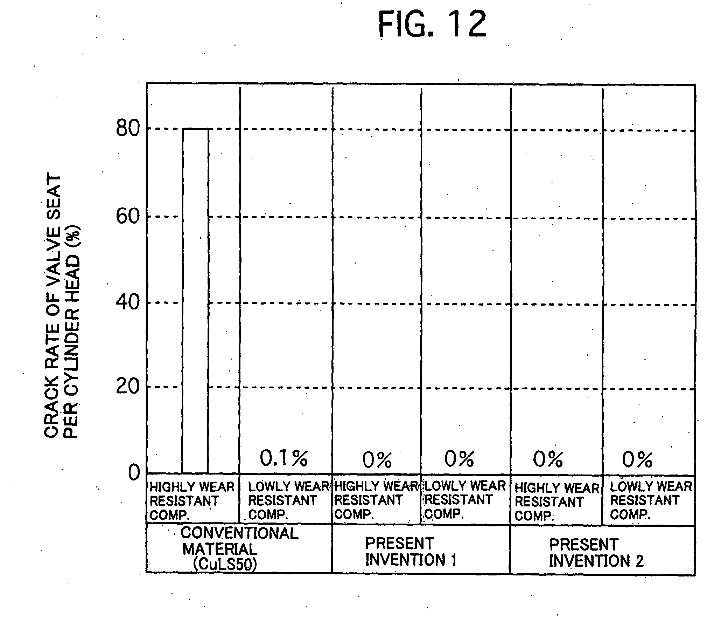

Results of the tests on the crack rates are shown in Figure 12. As shown in Figure 12, the crack rate was extremely high on the test piece of the conventional material with the highly wear resistant composition. On the other hand, the rack rates were as extremely low as 0% on the test piece of the present invention 1 with the highly wear resistant composition and that of the present invention 1 with the lowly wear resistant composition. The crack rates were also as extremely low as 0% on the test piece of the present invention 2 with the highly wear resistant composition and that of the present invention 2 with the lowly wear resistant composition.

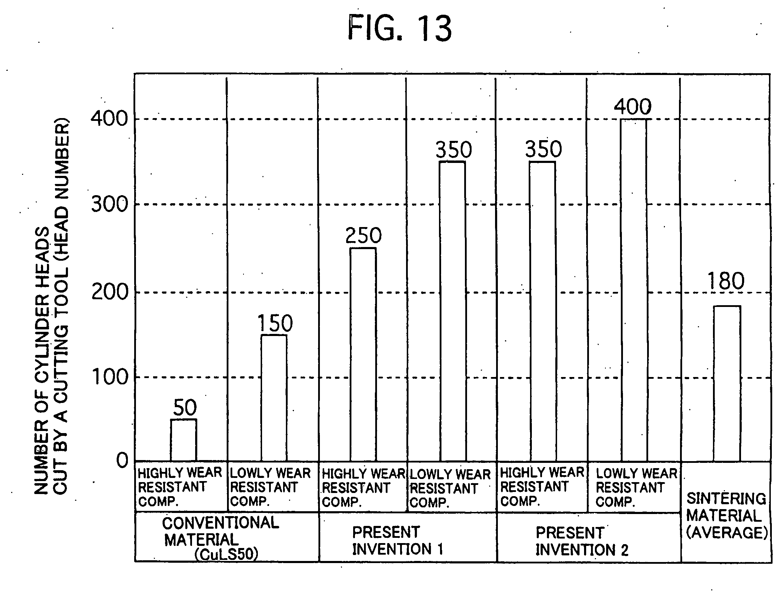

Moreover, weld bead layers to act as valve seats were individually formed in cylinder heads by using powders whose compositions were respectively prescribed by adjusting the abovementioned conventional material, the present invention 1 and the present invention 2 to have highly wear resistant composition and lowly wear resistant composition, and then the weld bead layers were cut by a cutting tool (a carbide cutting tool) and the number of cylinder heads cut by a single cutting tool was measured. The test results are shown in Figure 13.

As shown in Figure 13, in the case of the test piece of the conventional material with the highly wear resistant composition and that of the conventional material with the lowly wear resistant composition, the number of cylinder heads cut by a single cutting tool was small, i.e., machinability was poor. On the other hand, in the case of the test piece of the present invention 1 with the highly wear resistant composition, that of the present invention 1 with the lowly abrasion resistant composition, that of the present invention 2 with the highly wear resistant composition and that of the present invention 2 with the lowly wear resistant composition, the number of cylinder heads cut by a single cutting tool was considerably large, i.e., machinability was favorable. When the abovementioned test piece of the iron-base sintering material was similarly examined about machinability, the number of cylinder heads cut by a single cutting tool was as small as about 180, i.e., machinability was not so favorable.

The total evaluation of the abovementioned test results shows that if the whole of a valve seat, which is a movable valve component part of an internal combustion engine, is formed of a weld bead layer of the wear-resistant copper-base alloy according to the present invention or a valve seat is overlaid by a weld bead layer of the wear-resistant copper-base alloy according to the present invention, wear resistance of the valve seat can be improved and moreover aggressiveness against a mating member can be suppressed and weight loss by abrasion of a valve as a mating member can be suppressed. Further, this is advantageous in enhancing crack resistance and machinability, and especially advantageous in forming a weld bead layer in a building up operation.

The present inventors conducted more tests. Table 1 shows the composition and test results of Sample a1 to Sample i1, which respectively corresponded to Sample a to Sample i. As understood from the composition shown in Table 1, Sample a1 to Sample i1 had basically similar composition to those of Sample a to Sample i, except that the Co content was 0.5% instead of 1.0%. Table 2 shows the composition and test results of Sample a2 to Sample i2, which respectively corresponded to Sample a to Sample i. As understood from the composition shown Table 2, Sample a2 to Sample i2 respectively had similar composition to those of Sample a to Sample i, except that the Co content was 1.8% instead of 1.0%.

It was understood from the test results shown in Table 1 that the weld bead layers formed of the powders of the wear-resistant copper-base alloys of Sample b1, Sample d1, Sample f1, Sample h1 and Sample i1 as examples of the present invention obtained crack resistance, wear resistance and machinability in a balanced manner when compared with those of the comparative examples.

It was understood from the test results shown in Table 2 that the weld bead layers formed of the powders of the wear-resistant copper-base alloys of Sample b2, Sample d2, Sample f2, Sample h2, and Sample i2 as examples of the present invention obtained crack resistance, wear resistance and machinability in a balanced manner when compared with those of the comparative examples.

Table 3 shows the composition and test results of Sample m1 to Sample q1, which respectively corresponded to Sample m to Sample q. As understood from the composition shown in Table 1, Sample m1 to Sample i1 respectively had similar composition to those of Sample m to Sample q, except the Co content was 0.5% instead of 1.0%.

Table 3 shows the composition and test results of Sample m2 to Sample q2, which respectively corresponded to Sample m to Sample q. As understood from the composition shown in Table 3, Sample m2 to Sample q2 respectively had similar composition to those of Sample m to Sample q, except the Co content was 1.8% instead of 1.0%

It was understood from the test results shown in Table 3 that the weld bead layers formed of the powders of the wear-resistant copper-base alloys of Sample m1, Sample n1, Sample o1, Sample p1 and Sample q1 as examples of the present invention obtained crack resistance, wear resistance and machinability in a balanced manner when compared with those of the comparative examples.

It was further understood from the test results shown in Table 3 that the weld bead layers formed of the powders of the wear-resistant copper-base alloys of Sample m2, Sample n2, Sample o2, Sample p2, and Sample q2 as examples of the present invention obtained crack resistance, wear resistance and machinability in a balanced manner when compared with those of the comparative examples.

Table 4 shows the composition and test results of Sample v1 to Sample z1, which respectively corresponded to Sample v to Sample z. As understood from the composition shown in Table 4, Sample v1 to Sample z1 respectively had similar composition to those of Sample v to Sample z, except that the Co content was 0.5% instead of 1.0%.

Table 4 shows the composition and test results of Sample v2 to Sample z2, which respectively corresponded to Sample v to Sample z. As understood from the composition shown in Table 3, Sample v2 to Sample z2 respectively had similar composition to those of Sample v to Sample z, except that the Co content was 1.8% instead of 1.0%.

It was understood from the test results shown in Table 4 that weld bead layers formed of powders of the wear-resistant copper-base alloys of Sample v1, Sample w1, Sample x1, Sample y1, and Sample z1 as examples of the present invention obtained crack resistance, wear resistance and machinability in a balanced manner when compared to those of the comparative examples.

It was further understood from the test results shown in Table 4 that weld bead layers formed of powders of the wear-resistant copper-base alloys of Sample v2, Sample w2, Sample x2, Sample y2, and Sample z2 as examples of the present invention can obtain crack resistance, wear resistance and machinability in a balanced manner when compared to those of the comparative examples.

With regard to the abovementioned weld bead layer formed of each of the samples as examples of the present invention, the matrix had a hardness of about Hv 130 to 250, especially Hv 150 to 200, while the hard particles had a hardness of about Hv 250 to 700, especially Hv 300 to 700, which was higher than that of the matrix. The hard particles had a size of 20 to 3000 µm. With regard to the abovementioned weld bead layer formed of each of the samples as examples of the present invention, the volume ratio of the hard particles to the wear-resistant copper-base alloy felled on the range from about 5 to 60%, when the wear-resistant copper-base alloy was assumed as 100%.

Table 5 shows the results of analysis (EDX) on the composition of weld bead layers actually built on by using Sample d and Sample h. In this case, an examination was carried out on the composition of hard particles when the hard particles dispersed in each of the wear-resistant copper-base alloys were assumed as 100% by weight. An examination was also carried out on the composition of each matrix when the matrix of each wear-resistant copper-base alloy (excluding the hard particles) was assumed as 100% by weight. As shown in Figure 4 and Figure 5, Sample d and Sample h had the composition in the periphery of the optimal range. As shown in Table 5, in the case of Sample d, the hard particles were rich in Mo, Fe and Ni, and the matrix was rich in Cu and Ni. In the case of Sample h, the hard particles were rich in Cu, Mo, Fe and Ni, and the matrix was rich in Cu and Ni. It is supposed that 1.0% Al contained in the matrix of the weld bead layers was diffused from a mother material (an aluminum alloy) to which the building up operation was conducted into the weld bead layers owing to the melting during the building up operation. Basically, Al was not contained in the hard particles.

**[TABLE1]**

| | SAMPLE | WEAR-RESISTANT COPPER-BASE ALLOY COMPOSITION % by weight | | | | | | | CRACK RATE | WEIGHT LOSS BY ABRASION OF VALVE SEAT | MACHINABILITY |
|---|---|---|---|---|---|---|---|---|---|---|---|
| | | Cu | Ni | Si | Mo | Fe | Cr | Co | % | mg | the number of heads |
| COMP.EX. | a | BALANCE | 22.5 | 2.3 | 22.5 | 12.5 | 1.5 | 1.0 | 1.5 | 2-3 | 180 |
| EX. | b | BALANCE | 17.5 | 2.3 | 17.5 | 17.5 | 1.5 | 1.0 | 0 | 3-4 | 250 |
| COMP.EX. | c | BALANCE | 12.5 | 2.3 | 12.5 | 22.5 | 1.5 | 1.0 | 0.20 | 10-12 | 280 |
| EX. | d | BALANCE | 20.0 | 2.3 | 20.0 | 20.0 | 1.5 | 1.0 | 0.10 | 1-2 | 200 |
| COMP.EX. | e | BALANCE | 7.5 | 2.3 | 7.5 | 2.5 | 1.5 | 1.0 | 0 | 12-15 | 300 |
| EX. | f | BALANCE | 5.5 | 2.3 | 5.5 | 4.5 | 1.5 | 1.0 | 0 | 8-10 | 350 |
| COMP.EX. | g | BALANCE | 2.5 | 2.3 | 2.5 | 7.5 | 1.5 | 1.0 | 0 | 12-16 | 370 |
| EX. | h | BALANCE | 5.0 | 2.3 | 3.0 | 3.0 | 1.5 | 1.0 | 0 | 8-10 | 350 |
| EX. | i | BALANCE | 18.0 | 2.3 | 8.0 | 10.0 | 1.5 | 1.0 | 0 | 4-5 | 330 |
| COMP.EX. | a1 | BALANCE | 22.5 | 2.3 | 22.5 | 12.5 | 1.5 | 0.5 | 1.0 | 3-4 | 200 |
| EX. | b1 | BALANCE | 17.5 | 2.3 | 17.5 | 17.5 | 1.5 | 0.5 | 0.04 | 4-5 | 270 |
| COMP.EX. | c1 | BALANCE | 12.5 | 2.3 | 12.5 | 22.5 | 1.5 | 0.5 | 0.10 | 12-14 | 300 |
| EX. | d1 | BALANCE | 20.0 | 2.3 | 20.0 | 20.0 | 1.5 | 0.5 | 0.05 | 2-4 | 220 |
| COMP.EX. | e1 | BALANCE | 7.5 | 2.3 | 7.5 | 2.5 | 1.5 | 0.5 | 0 | 12-15 | 300 |
| EX. | f1 | BALANCE | 5.5 | 2.3 | 5.5 | 4.5 | 1.5 | 0.5 | 0 | 8-10 | 350 |
| COMP.EX. | g1 | BALANCE | 2.5 | 2.3 | 2.5 | 7.5 | 1.5 | 0.5 | 0 | 12-16 | . 370 |
| EX. | h1 | BALANCE | 5.0 | 2.3 | 3.0 | 3.0 | 1.5 | 0.5 | 0 | 8-10 | 350 |
| EX. | i1 | BALANCE | 18.0 | 2.3 | 8.0 | 10.0 | 1.5 | 0.5 | 0 | 4-5 | 330 |

**[TABLE 2]**

| | SAMPLE | WEAR-RESISTANT COPPER-BASE ALLOY COMPOSITION % by weight | | | | | | | CRACK RATE | WEIGHT LOSS BY ABRASION OF VALVE SEAT | MACHINABILITY |
|---|---|---|---|---|---|---|---|---|---|---|---|
| | | Cu | Ni | Si | Mo | Fe | Cr | Co | % | mg | the number of heads |
| COMP.EX. | a2 | BALANCE | 22.5 | 2.3 | 22.5 | 12.5 | 1.5 | 1.8 | 1.75 | 1-2 | 160 |
| EX. | b2 | BALANCE | 17.5 | 2.3 | 17.5 | 17.5 | 1.5 | 1.8 | 1.0 | 2-3 | 230 |
| COMP.EX. | c2 | BALANCE | 12.5 | 2.3 | 12.5 | 22.5 | 1.5 | 1.8 | 0.40 | 8-10 | 260 |
| EX. | d2 | BALANCE | 20.0 | 2.3 | 20.0 | 20.0 | 1.5 | 1.8 | 0.20 | 1-2 | 180 |
| COMP.EX. | e2 | BALANCE | 7.5 | 2.3 | 7.5 | 2.5 | 1.5 | 1.8 | 0 | 10-13 | 280 |
| EX. | f2 | BALANCE | 5.5 | 2.3 | 5.5 | 4.5 | 1.5 | 1.8 | 0 | 6-8 | 330 |
| COMP.EX. | g2 | BALANCE | 2.5 | 2.3 | 2.5 | 7.5 | 1.5 | 1.8 | 0 | 10-14 | 350 |
| EX. | h2 | BALANCE | 5.0 | 2.3 | 3.0 | 3.0 | 1.5 | 1.8 | 0 | 6-8 | 330 |
| EX. | i2 | BALANCE | 18.0 | 2.3 | 8.0 | 10.0 | 1.5 | 1.8 | 0 | 3-4 | 310 |

**[TABLE 3]**

| | SAMPLE | WEAR-RESISTANT COPPER-BASE ALLOY COMPOSITION % by weight | | | | | | | | CRACK RATE | WEIGHT LOSS BY ABRASION OF VALVE SEAT | MACHINABILITY |
|---|---|---|---|---|---|---|---|---|---|---|---|---|
| | | Cu | Ni | Si | W | Fe | Cr | Co | NbC | % | mg | the number of heads |
| Ex. | m | BALANCE | 17.5 | 2.3 | 17.5 | 17.5 | 1.5 | 1.0 | 0 | 0.09 | 3-4 | 250 |
| Ex. | n | BALANCE | 20.0 | 2.3 | 20.0 | 20.0 | 1.5 | 1.0 | 0 | 0.10 | 1-2 | 200 |
| Ex. | o | BALANCE | 5.5 | 2.3 | 5.5' | 4.5 | 1.5 | 1.0 | 0 | 0 | 8-10 | 350 |
| Ex. | p | BALANCE | 5.0 | 2.3 | 3.0 | 3.0 | 1.5 | 1.0 | 0 | 0 | 8-10 | 350 |
| Ex. | q | BALANCE | 18.0 | 2.3 | 8.0 | 10.0 | 1.5 | 1.0 | 0 | 0 | 4-5 | 330 |
| EX. | m1 | BALANCE | 17.5 | 2.3 | 17.5 | 17.5 | 1.5 | 0.5 | 0 | 0 | 4-5 | 270 |
| EX: | n1 | BALANCE | 20.0 | 2.3 | 20.0 | 20.0 | 1.5 | 0.5 | 0 | 0 | 2-3 | 220 |
| EX. | o1 | BALANCE | 5.5 | 2.3 | 5.5 | 4.5 | 1.5 | 0.5 | 0 | 0 | 10-12 | 370 |
| EX. | p2 | BALANCE | 5.0 | 2.3 | 3.0 | 3.0 | 1.5 | 0.5 | 0 | 0 0 | 10-12 | 370 |
| EX. | q1 | BALANCE | 18.0 | 2.3 | 8.0 | 10.0 | 1.5 | 0.5 | 0 | 0 | 6-8 | 350 |
| EX. | m2 | BALANCE | 17.5 | 2.3 | 17.5 | 17.5 | 1.5 | 1.8 | 0 | 0.2 | 2-3 | 230 |
| EX. | n2 | BALANCE | 20.0 | 2.3 | 20.0 | 20.0 | 1.5 | 1.8 | 0 | '0.2 | 0.5-1 | 180 |
| EX. | o2 | BALANCE | 5.5 | 2.3 | 5.5 | 4.5 | 1.5 | 1.8 | 0 | 0 | 6-8 | 370 |
| EX. | p2 | BALANCE | 5.0 | 2.3 | 3.0 | 3.0 | 1.5 | 1.8 | 0 | 0 | 6-8 | 370 |
| EX. | q2 | BALANCE | 18.0 | 2.3 | 8.0 | 10.0 | 1.5 | 1.8 | 0 | 0 0 | 3-4 | 310 |

**[TABLE 4]**

| | SAMPLE | WEAR-RESISTANT COPPER-BASE ALLOY COMPOSITION % by weight | | | | | | | | CRACK RATE | WEIGHT LOSS BY ABRASION OF VALVE SEAT | MACHINABILITY |
|---|---|---|---|---|---|---|---|---|---|---|---|---|
| | | Cu | Ni | Si | Mo | Fe | Cr | Co | NbC | % | mg | the number of heads |
| Ex. | v | BALANCE | 17.5 | 2.3 | 17.5 | 17.5 | 1.5 | 1.0 | 1.2 | 0 | 2-3 | 350 |
| Ex. | w | BALANCE | 20.0 | 2.3 | 20.0 | 20.0 | 1.5 | 1.0 | 1.2 | 0 | 0.5-1 | 220 |
| Ex. | x | BALANCE | 5.5 | 2.3 | 5.5 | 4.5 | 1.5 | 1.0 | 1.2 | 0 | 6-8 | 400 |
| Ex. | y | BALANCE | 5.0 | 2.3 | 3.0 | 3.0 | 1.5 | 1.0 | 1.2 | 0 | 6-8 | 370 |
| Ex. | z | BALANCE | 18.0 | 2.3 | 8.0 | 10.0 | 1.5 | 1.0 | 1.2 | 0 | 3-4 | 350 |
| EX. | v1 | BALANCE | 17.5 | 2.3 | 17.5 | 17.5 | 1.5 | 0.5 | 1.2 | 0 | 3-4 | 370 |
| EX. | w1 | BALANCE | 20.0 | 2.3 | 20.0 | 20.0 | 1.5 | 0.5 | 1.2 | 0 | 1-2 | 240 |
| EX. | x1 | BALANCE | 5.5 | 2.3 | 5.5 | 4.5 | 1.5 | 0.5 | 1.2 | 0 | 8-10 | 420 |
| EX. | y1 | BALANCE | 5.0 | 2.3 | 3.0 | 3.0 | 1.5 | 0.5 | 1.2 | 0 | 8-10 | 390 |
| EX. | z1 | BALANCE | 18.0 | 2.3 | 8.0 | 10.0 | 1.5 | 0.5 | 1.2 | 0 | 4-5 | 370 |
| EX. | v2 | BALANCE | 17.5 | 2.3 | 17.5 | 17.5 | 1.5 | 1.8 | 1.2 | 0 | 1-2 | 330 |
| EX. | w2 | BALANCE | 20.0 | 2.3 | 20.0 | 20.0 | 1.5 | 1.8 | 1.2 | 0 | 0.1-0.5 | 200 |
| EX. | x2 | BALANCE | 5.5 | 2.3 | 5.5 | 4.5 | 1.5 | 1.8 | 1.2 | 0 | 4-6 | 380 |
| EX. | y2 | BALANCE | 5.0 | 2.3 | 3.0 | 3.0 | 1.5 | 1.8 | 1.2 | 0 | 4-6 | 350 |
| EX. | z2 | BALANCE | 18.0 | 2.3 | 8.0 | 10.0 | 1.5 | 1.8 | 1.2 | 0 | 2-3 | 330 |

**[TABLE 5]**

| | COMPOSITION (% by weight) | | | | | | | |
|---|---|---|---|---|---|---|---|---|
| | Cu | Ni | Si | Mo | Fe | Cr | Co | OTHERS |
| ENTIRE MIXING COMPOSITION OF SAMPLE d | BALANCE | 20.0 | 2.3 | 20.0 | 20.0 | 1.5 | 1.0 | |
| ANALYZED COMPOSITION OF HARD PARTICLES OF SAMPLE d | BALANCE (3.7) | 21.0 | 9.0 | 44.3 | 18.2 | 2.9 | 0.9 | |
| ANALYZED COMPOSITION OF MATRIX OF SAMPLE d | BALANCE (70.4) | 18.2 | 1.6 | 0 | 8.5 | 0.1 | 0.2 | AI=1.0 |
| ENTIRE MIXING COMPOSITION OF SAMPLE h | BALANCE | 5.0 | 2.3 | 3.0 | 3.0 | 1.5 | 1.0 | |
| ANALYZED COMPOSITION OF HARD PARTICLES OF SAMPLE h | BALANCE (45.1) | 7.3 | 6.6 | 23.7 | 12.5 | 3.9 | 0.9 | |
| ANALYZED COMPOSITION OF MATRIX OF SAMPLE h | BALANCE (76.4) | 12.9 | 1.2 | 0 | 7.3 | 1.0 | 0.2 | Al=1.0 |

### (APPLICATION EXAMPLE)

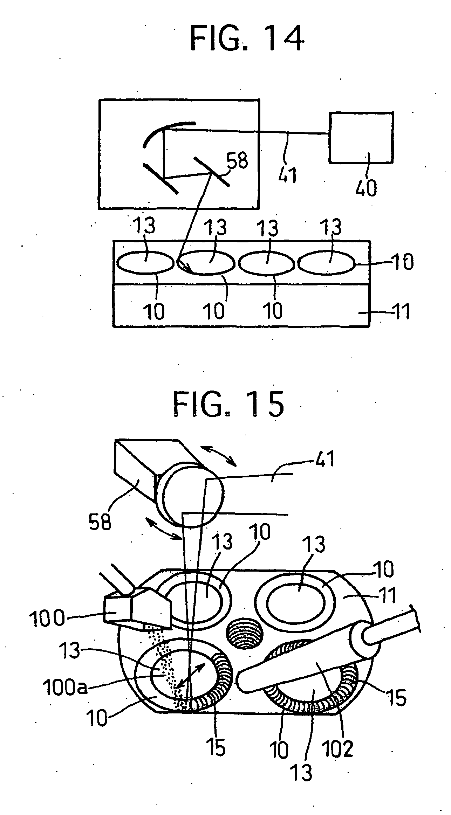

Figure 14 and Figure 15 schematically show a process of building up a wear-resistant copper-base alloy and forming valve seats on ports 13, which communicate with a combustion chamber of a vehicular internal combustion engine 11. In this case, annular peripheral surfaces 10 are formed at inner peripheral portions of the plurality of ports 13, which are formed of an aluminum alloy and communicate with the combustion chamber of the internal combustion engine 11. With a sprayer 100 held near one of the peripheral surfaces 10, a powdery layer is formed by depositing powder 100a of the wear-resistant copper-base alloy according to the present invention on the one of the peripheral surfaces 10, and at the same time, a laser beam 41 emitted from a laser emitter 40 and kept oscillated by a beam oscillator 58 is radiated on the powdery layer. Thus a weld bead layer 15 is formed on the one of the peripheral surfaces 10. This weld bead layer 15 will act as a valve seat. In the building up operation, a shielding gas (generally argon gas) is supplied from a gas supply unit 102 to a portion to be built up so as to shield the portion to be built up.

### (OTHERS)

In the abovementioned examples, powders of the wear-resistant copper-base alloys were formed by gas atomization, but the method of powder formation is not limited to this: Wear-resistant copper-base alloy powder for buildup can be formed by mechanical atomization in which molten metal is crashed against a revolving body to be made into powder, or by mechanical pulverization with the use of a pulverizing apparatus.

In the abovementioned examples, the present invention was applied to valve seats constituting movable valves of a combustion engine, but application of the present invention is not limited to this: In some cases, the present invention can be applied to a material for valves, which act as mating members of valve seats, or to a material to be built up on valves. The internal combustion engine can be a gasoline engine or a diesel engine. In the abovementioned examples, the present invention was applied to building up, but application of the present invention is not limited to this: In some cases, the present invention can be applied to ingot products or sintered products.

Besides, the present invention is not limited to the examples described above and shown in the figures. Appropriate modification can be made to the working out of the present invention without departing from the scope of the invention defined by the claims.

### INDUSTRIAL UTILITY FIELD

As mentioned above, the wear-resistant copper-base alloy according to the present invention can be applied, for instance, to a copper-base alloy constituting sliding portions of sliding members typically exemplified by valve train members such as valve seats and valves of an internal combustion engine.

## Claims

1. A wear-resistant copper-base alloy, comprising, by weight, of 5.0 to 20.0% nickel, 0.5 to 5.0% silicon, 3.0 to 20.0% iron, 1.0 to 15.0% chromium, 0.01 to 2.00% cobalt, 3.0 to 20.0% one or more of molybdenum, tungsten and vanadium, optionally 0.01 to 5.0% niobium carbide and the balance of copper with inevitable impurities.

2. A wear-resistant copper-base alloy according to claim 1, comprising, by weight, 0.01 to 5.0% niobium carbide.

3. A wear-resistant copper-base alloy according to claim 1 or claim 2, wherein silicide is dispersed.

4. A wear-resistant copper-base alloy according to one of claim 1 to claim 3, wherein silicide composed principally of one or more of Fe-Mo, Fe-W and Fe-V is dispersed therein.

5. A wear-resistant copper-base alloy according to one of claim 1 to claim 4, further comprising a matrix and hard particles dispersed in said matrix, wherein
said hard particles are mainly composed of silicide which is composed principally of one or more of Fe-Mo, Fe-W and Fe-V, and a Ni-Fe-Cr based solid solution, and
said matrix is mainly composed of a Cu-Ni based solid solution, and silicide composed principally of nickel.

6. A wear-resistant copper-base alloy according to one of claim 1 to claim 4, further comprising a matrix and hard particles dispersed in said matrix, wherein
said hard particles are mainly composed of silicide which is composed principally of Fe-Mo, and a Ni-Co-Fe-Cr based solid solution.

7. A wear-resistant copper-base alloy according to one of claim 1 to claim 6, wherein cobalt is contained in the range from 0.01 to 1.94%.

8. A wear-resistant copper-base alloy according to one of claim 1 to claim 7, wherein the content of (Fe + Mo) is set in the range from 10 to 35% by weight.

9. A wear-resistant copper-base alloy according to one of claim 1 to claim 8, wherein the content of (Fe + Mo) is set in the range from 10 to 35% by weight and the content of (Ni + Fe) is set in the range from 10 to 35% by weight.

10. A wear-resistant copper-base alloy according to one of claim 5 to claim 9, wherein said matrix has an average hardness of Hv 130 to 250, and said hard particles have an average hardness of about Hv 250 to 700, which is higher than that of said matrix.

11. A wear-resistant copper-base alloy according to one of claim 5 to claim 10, wherein said hard particles are contained by 10 to 60% by volume when said wear-resistant copper-base alloy is assumed as 100%.

12. A wear-resistant copper-base alloy according to one of claim 5 to claim 11, wherein said hard particles have an average particle diameter of 20 to µm.

13. A wear-resistant copper-base alloy according to one of claim 1 to claim 12, which is suitable for cladding.

14. A wear-resistant copper-base alloy according to one of claim 1 to claim 13, which is suitable for cladding by being melt by a high-density energy beam and then cooled.

15. A wear-resistant copper-base alloy according to one of claim 1 to claim 14, which constitutes a weld bead layer.

16. A wear-resistant copper-base alloy according to one of claim 1 to claim 15, which constitutes sliding portions of sliding members.

17. A wear-resistant copper-base alloy according to one of claim 1 to claim 16, which constitutes sliding portions of sliding members for a valve train member for an internal combustion engine.

## Patentansprüche

1. Verschleißbeständige Legierung auf Kupferbasis, die aufs Gewicht bezogen 5,0 bis 20,0% Nickel, 0,5 bis 5,0% Silizium, 3,0 bis 20,0% Eisen, 1,0 bis 15,0% Chrom, 0,01 bis 2,00% Kobalt, 3,0 bis 20,0% von einem oder mehreren der Bestandteile Molybdän, Wolfram und Vanadium, optional 0,01 bis 5,0% Niobcarbid sowie Rest Kupfer mit unvermeidlichen Verunreinigungen umfasst.

2. Verschleißbeständige Legierung auf Kupferbasis nach Anspruch 1, die aufs Gewicht bezogen 0,01 bis 5,0% Niobcarbid umfasst.

3. Verschleißbeständige Legierung auf Kupferbasis nach Anspruch 1 oder 2, wobei Silicid dispergiert ist.

4. Verschleißbeständige Legierung auf Kupferbasis nach einem der Ansprüche 1 bis 3, wobei in ihr Silicid dispergiert ist, das vornehmlich aus einem oder mehreren der Bestandteile Fe-Mo, Fe-W und Fe-V besteht.

5. Verschleißbeständige Legierung auf Kupferbasis nach einem der Ansprüche 1 bis 4, die außerdem eine Matrix und in der Matrix dispergierte harte Teilchen umfasst, wobei
die harten Teilchen hauptsächlich aus Silicid, das vornehmlich aus einem oder mehreren der Bestandteile Fe-Mo, Fe-W und Fe-V besteht, und einem Mischkristall auf Ni-Fe-Cr-Basis bestehen, und
die Matrix hauptsächlich aus einem Mischkristall auf Cu-Ni-Basis und einem vornehmlich aus Nickel bestehenden Silicid besteht.

6. Verschleißbeständige Legierung auf Kupferbasis nach einem der Ansprüche 1 bis 4, die außerdem eine Matrix und in der Matrix dispergierte harte Teilchen umfasst, wobei
die harten Teilchen hauptsächlich aus Silicid, das vornehmlich aus Fe-Mo besteht, und einem Mischkristall auf Ni-Co-Fe-Cr-Basis bestehen.

7. Verschleißbeständige Legierung auf Kupferbasis nach einem der Ansprüche 1 bis 6, wobei Kobalt im Bereich von 0,01 bis 1,94% enthalten ist.

8. Verschleißbeständige Legierung auf Kupferbasis nach einem der Ansprüche 1 bis 7, wobei der Gehalt an (Fe + Mo) im Bereich von 10 bis 35 Gew.-% eingestellt ist.

9. Verschleißbeständige Legierung auf Kupferbasis nach einem der Ansprüche 1 bis 8, wobei der Gehalt an (Fe + Mo) im Bereich von 10 bis 35 Gew.-% eingestellt ist und der Gehalt an (Ni + Fe) im Bereich von 10 bis 35 Gew.-% eingestellt ist.

10. Verschleißbeständige Legierung auf Kupferbasis nach einem der Ansprüche 5 bis 9, wobei die Matrix eine mittlere Härte von Hv 130 bis 250 hat und die harten Teilchen eine höhere mittlere Härte als die Matrix von etwa Hv 250 bis 700 haben.

11. Verschleißbeständige Legierung auf Kupferbasis nach einem der Ansprüche 5 bis 10, wobei die harten Teilchen mit 10 bis 60 Vol.-% enthalten sind, wenn für die verschleißbeständige Legierung auf Kupferbasis 100% angenommen wird.

12. Verschleißbeständige Legierung auf Kupferbasis nach einem der Ansprüche 5 bis 11, wobei die harten Teilchen einen mittleren Teilchendurchmesser von 20 bis 3000 µm haben.

13. Verschleißbeständige Legierung auf Kupferbasis nach einem der Ansprüche 1 bis 12, die zum Überziehen geeignet ist.

14. Verschleißbeständige Legierung auf Kupferbasis nach einem der Ansprüche 1 bis 13, die zum Überziehen geeignet ist, wobei sie durch einen hochdichten Energiestrahl zum Schmelzen gebracht und dann abgekühlt wird.

15. Verschleißbeständige Legierung auf Kupferbasis nach einem der Ansprüche 1 bis 14, die eine Schweißnahtlage bildet.

16. Verschleißbeständige Legierung auf Kupferbasis nach einem der Ansprüche 1 bis 15, die Gleitabschnitte von Gleitelementen bildet.

17. Verschleißbeständige Legierung auf Kupferbasis nach einem der Ansprüche 1 bis 16, die Gleitabschnitte von Gleitelementen für ein Ventiltriebelement eines Verbrennungsmotors bildet.

## Revendications

1. Alliage à base de cuivre résistant à l'usure, comprenant, en poids, de 5,0 à 20,0 % de nickel, 0,5 à 5,0 % de silicium, 3,0 à 20,0 % de fer, 1,0 à 15,0 % de chrome, 0,01 à 2,00 % de cobalt, 3,0 à 20,0 % d'un ou plusieurs parmi le molybdène, le tungstène et le vanadium, éventuellement de 0,01 à 5,0 % de carbure de niobium et le reste de cuivre avec des impuretés inévitables.

2. Alliage à base de cuivre résistant à l'usure selon la revendication 1, comprenant, en poids, 0,01 à 5,0 % de carbure de niobium.

3. Alliage à base de cuivre résistant à l'usure selon la revendication 1 ou la revendication 2, dans lequel un siliciure est dispersé.

4. Alliage à base de cuivre résistant à l'usure selon l'une des revendications 1 à 3, dans lequel un siliciure composé principalement d'un ou plusieurs parmi le Fe-Mo, le Fe-W et le Fz-V est dispersé dedans.

5. Alliage à base de cuivre résistant à l'usure selon l'une des revendication 1 à 4, comprenant en outre une matrice et des particules dures dispersées dans ladite matrice, dans lequel
lesdites particules dures sont principalement composées de siliciure, qui est composé principalement d'un ou plusieurs parmi le Fe-Mo, le Fe-W et le Fe-V, et une solution solide à base de Ni-Fe-Cr, et
ladite matrice est principalement composée d'une solution solide à base de Cu-Ni, et d'un siliciure composé principalement de nickel.

6. Alliage à base de cuivre résistant à l'usure selon l'une des revendications 1 à 4, comprenant en outre une matrice et des particules dures dispersées dans ladite matrice, dans lequel
lesdites particules dures sont principalement composées de siliciure, qui est composé principalement de Fe-Mo, et d'une solution solide à base de Ni-Co-Fe-Cr.

7. Alliage à base de cuivre résistant à l'usure selon l'une des revendications 1 à 6, dans lequel du cobalt est contenu dans la gamme de 0,01 à 1,94 %.

8. Alliage à base de cuivre résistant à l'usure selon l'une des revendications 1 à 7, dans lequel la teneur en (Fe + Mo) est fixée dans la gamme de 10 à 35 % en poids.

9. Alliage à base de cuivre résistant à l'usure selon l'une des revendications 1 à 8, dans lequel la teneur en (Fe + Mo) est fixée dans la gamme de 10 à 35 % en poids et la teneur en (Ni + Fe) est fixée dans la gamme de 10 à 35 % en poids.

10. Alliage à base de cuivre résistant à l'usure selon l'une des revendications 5 à 9, dans lequel ladite matrice a une dureté moyenne de 130 à 250 Hv, et lesdites particules dures ont une dureté moyenne d'environ 250 à 700 Hv, qui est supérieure à celle de ladite matrice.

11. Alliage à base de cuivre résistant à l'usure selon l'une des revendications 5 à 10, dans lequel lesdites particules dures sont contenues à 10 à 60 % en volume lorsque ledit alliage à base de cuivre résistant à l'usure est supposé comme étant à 100 %.

12. Alliage à base de cuivre résistant à l'usure selon l'une des revendications 5 à 11, dans lequel lesdites particules dures ont un diamètre de particule moyen de 20 à 3 000 µm.

13. Alliage à base de cuivre résistant à l'usure selon l'une des revendications 1 à 12, qui est approprié pour un placage.

14. Alliage à base de cuivre résistant à l'usure selon l'une des revendications 1 à 13, qui est approprié pour un placage en étant fondu par un faisceau d'énergie de haute densité et ensuite refroidi.

15. Alliage à base de cuivre résistant à l'usure selon l'une des revendications 1 à 14, qui constitue une couche de cordon de soudure.

16. Alliage à base de cuivre résistant à l'usure selon l'une des revendications 1 à 15, qui constitue les parties coulissantes d'éléments coulissants.

17. Alliage à base de cuivre résistant à l'usure selon l'une des revendications 1 à 16, qui constitue les parties coulissantes d'éléments coulissants pour un élément de soupape d'échappement pour un moteur à combustion interne.
